# EUROPEAN PATENT APPLICATION

(11) **EP 1 162 622 A1**
(43) Date of publication of application: **12.12.2001**
(21) Application number: 01304575.2
(22) Date of filing: 24.05.2001
(51) Int. Cl.: G11B 33/04

(54) **Compact disc storage**

(30) Priority: 07.06.2000 GB 0013739
(71) Applicant: Duraweld Limited, Scarborough, North Yorkshire YO11 3UZ (GB)
(72) Inventor: McAlister Moorehouse, Richard, Senior, Scarborough, North Yorkshire (GB)
(74) Representative: MacMaster, Alan Jeffrey

(57) **Abstract**

A storage device for a plurality of generally planar storage members for compact discs or other flat articles comprises a base member (16) formed from synthetic plastics material and having integral upstanding locating members (20) disposed at spaced locations adjacent an edge (17B) of the base member, the locating members being adapted for engagement by complementary apertures (13) formed adjacent an edge of each of the storage members, whereby to retain the storage members on the base member in a manner in which they may pivot about an axis generally parallel to the said edge (17B) of the base member, each locating member (20) including a stalk or body portion (22) defined by forming spaced cuts (27a,27b) in the base member extending generally parallel to the said edge (17B) of the base member, the cut (27a) closer to the edge (17B) being shorter than the cut (27b) remote from the edge whereby to facilitate twisting movement of the locating members (20) relative to the base member (16) on pivotal movement of compact disc holders located in the device about an axis essentially parallel to the said edge (17B).

## Description

This invention relates to storage devices for compact discs.

Compact discs are generally sold in rigid plastic containers having a base incorporating a recess for accommodation of a compact disc and having a lid which is closed over the disc when in position. However these containers are inconvenient as a means of storing compact discs in a readily accessible manner. Moreover many compact discs are distributed free to readers of magazines and the like in simple plastic folders. With increasing usage of compact discs both for music and computer related purposes, there is a need for a simple means of storing a plurality of compact discs together in a secure, yet readily accessible manner.

In our co-pending United Kingdom Patent Application No. 9927546.3, there is disclosed a simple form of storage device adapted to secure together a plurality of compact disc storage members or holders, the device comprising a base member formed from synthetic plastics material incorporating integral locating means adapted to project upwardly from the base member in a freestanding manner and on to which one or more compact disc holders may be located by engagement of apertures at edge regions of the holders with the locating members. The free ends of the locating members are provided with formations serving to retain the compact disc holders in the device and in a preferred arrangement may be folded over the holders to additionally secure them in place and provide a generally flat upper surface to the assembly of device and holders. The storage device may incorporate a front cover hingedly connected to the base member and adapted in a closed position to extend over the base member to enclose the storage members between the base member and the cover member. The base and cover members are advantageously of the same size and shape and the device is preferably formed from a single sheet of flexible plastics material by cutting and folding.

Devices of this kind are of simple and inexpensive construction, the upstanding locating members forming the sole means of securing the compact disc holders or sleeves to the base member. However in use of such devices the assembled sleeves in which compact discs are contained are moved from a rest position in which they overlie the base of the device towards a position in which they are inverted and overlie the front cover. This hinging movement places a strain on the locating members which can result in damage to the locating members and to the base member itself.

The invention provides a storage device for a plurality of generally planar storage members for compact discs or other flat articles, the storage device comprising a base member formed from synthetic plastics material and having integral upstanding locating members disposed at spaced locations adjacent an edge of the base member, the locating members being adapted for engagement by complementary apertures formed adjacent an edge of each of said storage members, whereby to retain the storage members on the base member in a manner in which they may pivot about an axis generally parallel to said edge of the base member, each locating member including a stalk or body portion defined by forming spaced cuts in said base member extending generally parallel to said edge of the base member, the cut closer to said edge being shorter than the cut remote from said edge whereby to facilitate twisting movement of said locating members relative to said base member on pivotal movement of compact disc holders located in the device about an axis essentially parallel to said edge.

Preferably an inclined axis extending through the extremities of the cuts defining the stalk portion of each of said locating members is inclined at an angle of between 30° and 60° to said edge. Preferably the inclination of said line is approximately 45° to said edge.

Preferably each locating member is provided with a head portion of enlarged configuration at its free end, the head portion being resiliently deformable whereby it may be deformed to pass through said apertures in the storage members and then resiliently expands to retain the storage members in position on the base member.

Preferably the head portions of said locating members are deformable to overtie the compact disc holders following attachment of same to the locating members.

Preferably also the head portions of the locating members are of tapered form having a narrow terminal portion to facilitate initial engagement with said apertures in the compact disc holders and a wider region which serves, following engagement of the holders with the locating members, to retain the latter against disengagement. Advantageously the head portions of said locating members are of arrowhead shape.

Preferably said base member is of corresponding shape to and slightly larger extent than said storage members. The device may consist solely of the base member incorporating said locating members. Preferably however the device also incorporates a front cover member hingedly connected to said base member about said edge and adapted in a closed position to extend over said base member to enclose said storage members between the base member and said cover member.

Preferably said base and cover members are interconnected by a spine member adapted to space same apart by a distance sufficient to accommodate the number of storage members and compact discs the device is designed to accommodate. Locking means may advantageously be provided to retain the base and cover members in their closed positions. The locking means may comprise a locking flap hingedly connected to the edge of one of said members remote from said spine, a flexible tab formed on said flap and a slot in the other of said members with which the tab is adapted to engage. Preferably the tab is formed by cutting and shaping from the material of the flap.

Embodiments of the invention will now be described, by way of example only, with reference to the accompanying drawings, in which:-
Fig. 1 shows one side of a storage member or sleeve adapted to accommodate one or more compact discs;
Fig. 2 shows the other side of the sleeve shown in Fig. 1;
Fig. 3 is a perspective view of one form of storage device according to the invention in an open condition;
Fig. 4 is an enlarged perspective view showing a locating member incorporated in the device of Fig. 3;
Fig. 5 is a view similar to Fig. 3 showing the locating members after cutting from the material of the device but before folding to the position shown in Fig. 4; and
Fig. 6 is a view similar to Fig. 3 showing an alternative embodiment.

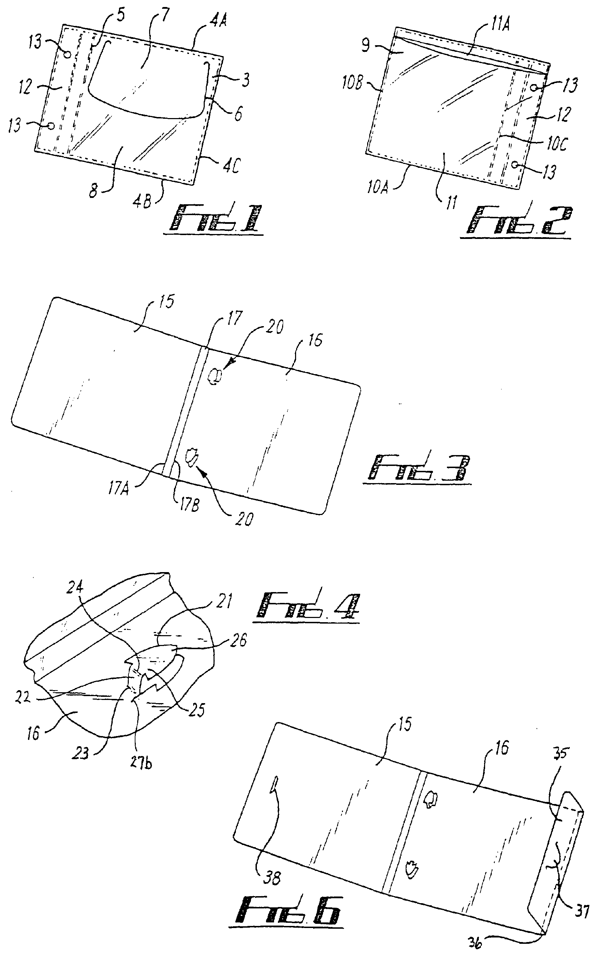

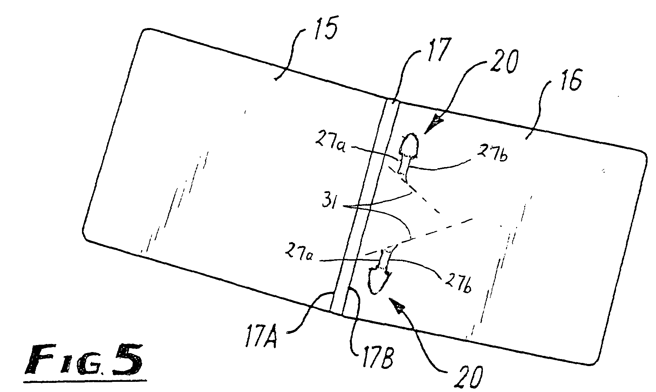

Referring to Figs. 1 and 2, there is shown a storage member in the form of a case or folder designed to accommodate a compact disc. The storage member comprises a central backing member of a non woven material, for example polypropylene or a polyvinyl chloride (PVC) - based material. The nonwoven material is free of particles, lint and dust to prevent contamination of the compact disc. To one surface of the central backing member is secured a sheet of transparent plastics material 3, for example polypropylene or PVC. The transparent sheet 3 is adhered to the backing sheet by ultra-sonic welding or other suitable means along the top, bottom and outer edges 4A, 4B and 4C of the backing sheet and along a line 5. A portion of the transparent sheet is cut along a line 6 to define a flap 7 and the lower portion of the transparent sheet forms a pocket 8 into which a compact disc can be inserted by lifting the flap 7. As seen in Fig. 2, a further sheet of transparent plastics material 9, for example polypropylene or PVC, is fixed to the opposite face of the backing sheet and is secured thereto at its bottom and outer edges 10A and 10B and along a line 10C corresponding to the line 5 of Fig. 1. This transparent sheet forms a further pocket 11 into which an information sheet or other literature relating to the matter stored on the compact disc can be inserted through its upper edge 11A.

A portion 12 of the storage member forms an attachment member by means of which the storage member may be detachably located in a storage device or cover according to the invention, examples of which are shown in Figs. 3 and 6. For this purpose apertures 13 are formed in the attachment member 12 for engagement with locating members on the cover as described hereafter. Compact disc storage members or sleeves of the kind described above are known as such and do not in themselves form part of the present invention.

Referring to Fig. 3 there is shown a storage device for a plurality of storage members or sleeves of the kind shown in Figs. 1 and 2. The storage device comprises a front cover member 15 and a back cover or base member 16 hingedly connected together by a spine 17. The cover members and spine are formed from a single sheet of synthetic plastics material, for example polypropylene, and may be folded about hinge lines 17A,17B to overlie one another. The back and front cover members are of the same shape as, but slightly larger in size than, the storage members shown in Figs. 1 and 2.

A pair of locating members 20 are provided on the back cover 16 of the storage device. One such locating member is shown in greater detail in Fig. 4 and comprises a lug or head portion 21 of generally arrowhead shape connected by a stalk-like body member 22 to the base member 16. The head portion 21 and stalk 22 are formed by cutting from the material of the base member 16 and by folding about hinge lines 23 and 24 whereby to bring the head portion 21 into a position displaced from but parallel to the surface of the base member 16. Two such locating members are provided towards the upper and lower edges of the base member 16 adjacent to the spine 17, the respective head portions 21 being directed away from one another as seen in Fig. 3.

The head portions 21 of the locating members, being formed from the plastics material of the base member 16 itself, are resiliently deformable. The inner or base region 25 of each head member adjacent to the stalk 22 is of greater width than the diameter of the apertures 13 in the attachment portion 12 of the sleeve shown in Figs. 1 and 2. The tip 26 of each lug 21 facilitates engagement with the associated aperture 13. Thus to locate the storage members or sleeves in the device the head members 21 are passed through the associated apertures 13 in each sleeve member by deforming the head member to permit the base portion 25 to pass through the aperture 13, following which the base portion expands by virtue of the inherent resiliency of the material from which it is constructed and thus projects beyond the aperture into contact with the adjacent surface of the portion 12 of the sleeve. In this way the sleeve is retained in position on the base member 16 by means of the locating members 20. A plurality of similar sleeve members may be accommodated on the locating members dependent on the length of the stalk members 22 and the width of the spine 17. To remove one or more sleeves the base regions of the locating lugs 21 are deformed to permit them to pass through the apertures 13 thus releasing the sleeves from the device.

In use of the device users will tend to move the sleeves from an initial position in which they are superimposed on the base member 16, to a position in which they overlie the front cover 15 as the user inspects successive discs or removes or replaces discs from any one of a plurality of sleeves located in the device. Although some degree of pivotal movement about the axes 5 and 10c takes place, in moving from one position to the other the sleeves tend to draw the locating members 20 with them. This tends to twist the stalk portions 22 of the locating members from their initial generally upright position to a position in which they are inclined towards the spine 17. This movement tends to pull upon the base of the stalk 22 at the corner remote from the spine 17 and can result in damage to the stalk, to the base 16 or both. In order to reduce or eliminate this tendency, the cuts formed in the base member 16 to define the stalk, are of different lengths, the cut nearest to the spine 17 being shorter than that remote from the spine 17. The shorter cut is shown at 27a in Fig. 5 of the drawings and the longer cut at 27b. As a result when the locating members are pulled towards the cover 15, they move about the inclined axis 31 defined by the line joining the ends of the cuts 27a and 27b. This permits greater movement of the locating members compared with the arrangement if the two cuts 27a and 27b were of equal length and has the dual benefit of facilitating hinging movement of successive sleeves and reducing stress and hence possible damage to the locating members 20 and base member 16 through repeated use of the device.

Fig. 6 shows a modified form of device incorporating latch means to retain the back and front covers in the closed position. For this purpose a flap 35 is hingedly connected to the outer edge of the base member 16 by way of a spine member 36 equal in width to the spine member 17. A tab 37 is formed in the flap 30 by cutting the material from which the flap is formed. A slot 38 is provided adjacent the outer edge of the front cover member 15 and is engageable by the tab 37 when the cover is in its closed position to retain the back and front cover members in place around the sleeves. In other respects the embodiment shown in Fig. 6 is constructed and operates in the manner described with reference to Fig. 3.

By virtue of the arrangements described, attachment of compact disc sleeves or holders for other generally flat articles to the cover may be effected in a simple and quick manner by deformation of the head portions of the locating members, thereby enabling folders incorporating desired numbers of sleeves to be readily assembled as desired. Each operation requires only that the lugs be deformed to initiate passage through the associated apertures and thereafter the lugs expand by virtue of the resilient nature of the material from which they are constructed so as to automatically return to their locking condition.

By virtue of the cuts defining the sides of the stalk portions of the locating members being longer at the edge remote from the line of junction between the base and cover members, hinging movement of successive sleeves during use is facilitated without resultant damage to the locating members or the base member from which they are formed. This improved hinging action is attained while retaining the essentially simple and inexpensive construction of the device as a whole which may be rapidly and economically produced from a single sheet of plastics material from which all the components of the device may be formed by cutting and folding operations.

Various modifications may be made without departing from the invention. For example the shapes and sizes of the sleeves or storage members and of the base and, where provided, the cover of the device may be varied. The locating members may be of different form, the head portions in particular being differently shaped and dimensioned if desired. Moreover while reference has been made herein primarily to devices for the storage of compact discs, the invention may be applied to devices for storing essentially flat or laminar articles of other kinds.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A storage device for a plurality of generally planar storage members for compact discs or other flat articles, the storage device comprising a base member formed from synthetic plastics material and having integral upstanding locating members disposed at spaced locations adjacent an edge of the base member, the locating members being adapted for engagement by complementary apertures formed adjacent an edge of each of said storage members, whereby to retain the storage members on the base member in a manner in which they may pivot about an axis generally parallel to said edge of the base member, each locating member including a stalk or body portion defined by forming spaced cuts in said base member extending generally parallel to said edge of the base member, **characterised in that** the cut (27a) closer to said edge (17B) is shorter than the cut (27b) remote from said edge whereby to facilitate twisting movement of said locating members (20) relative to said base member (16) on pivotal movement of compact disc holders located in the device about an axis essentially parallel to said edge (17b).

2. A storage device according to claim 1 **characterised in that** a line (31) extending through the extremities of the cuts (27a, 27b) defining the stalk portion (22) of each of said locating members (20) is inclined at an angle of between 30° and 60° to said edge (17b).

3. A storage device according to claim 2 **characterised in that** the inclination of said line (31) is approximately 45° to said edge (17b).

4. A storage device according to any of claims 1 to 3 **characterised in that** each locating member (20) is provided with a head portion (21) of enlarged configuration at its free end, the head portion being resiliently deformable whereby it may be deformed to pass through said apertures (13) in the storage members and then resiliently expands to retain the storage members in position on the base member (16).

5. A storage device according to claim 4 **characterised in that** the head portions (21) of said locating members (20) are deformable to overlie the compact disc holders following attachment of same to the locating members (20).

6. A storage device according to claim 4 or 5 **characterised in that** the head portions (21) of the locating members (20) are of tapered form having a narrow terminal portion (36) to facilitate initial engagement with said apertures (13) in the compact disc holders and a wider region (25) which serves, following engagement of the holders with the locating members, to retain the holders against disengagement.

7. A storage device according to claim 6 **characterised in that** the head portions (21) of said locating members (20) are of arrowhead shape.

8. A storage device according to any preceding claim **characterised in that** said base member (16) is of corresponding shape to and slightly larger extent than said storage members.

9. A storage device according to any preceding claim **characterised by** a front cover member (15) hingedly connected to said base member (16) about said edge (17) and adapted in a closed position to extend over said base member to enclose said storage members between the base member and said cover member.

10. A storage device according to claim 9 **characterised in that** said base and cover members (16, 15) are interconnected by a spine member adapted (17) to space same apart by a distance sufficient to accommodate the number of storage members and compact discs the device is designed to accommodate.

11. A storage device according to claim 9 or 10 **characterised by** locking means (37, 38) to retain the base (16) and cover (15) members in their closed positions.

12. A storage device according to claim 11 **characterised in that** said locking means comprises a locking flap (35) hingedly connected to the edge of one of said members (16) remote from said spine (17), a flexible tab (37) formed on said flap and a slot (38) in the other (15) of said members with which the tab is adapted to engage.

13. A storage device according to claim 12 **characterised in that** said tab (37) is formed by cutting and shaping from the material of the flap (35).

14. A storage device according to any preceding claim **characterised by** a plurality of storage members for compact discs or other flat articles engaged with said locating members (20).
